# EUROPÄISCHE PATENTSCHRIFT

(11) **EP 3 739 305 B1**
(45) Veröffentlichungstag und Bekanntmachung des Hinweises auf die Patenterteilung: **07.06.2023**
(21) Anmeldenummer: 20182403.4
(22) Anmeldetag: 26.07.2016
(51) Int. Cl.: G01G 19/02, G08G 1/02

(54) **WIM SENSOR MIT SENSORPAKET**
WIM SENSOR WITH SENSOR PACKAGE
CAPTEUR WIM ET BOITIER

(43) Veröffentlichungstag der Anmeldung: 18.11.2020
(62) Teilanmeldung aus: 16181259.9
(73) Patentinhaber: Kistler Holding AG, 8408 Winterthur (CH)
(72) Erfinder: Pfluger, Kim, 8404 Winterthur (CH)

(56) Entgegenhaltungen:
- US-A- 4 799 381

## Beschreibung

### Technisches Gebiet

Die Erfindung betrifft einen WIM Sensor zum Messen von Radkräften von Fahrzeugen auf einer Strasse bei der Überfahrt; wobei der WIM Sensor ein entlang einer Längsachse lang ausgestaltetes Hohlprofil mit einem Innenraum aufweist, welcher Innenraum eine erste und eine zweite innere Pressfläche aufweist, welche Pressflächen einander gegenüber angeordnet sind und beidseitig über gebogene, vorgespannte Profilränder miteinander verbunden sind; wobei im Innenraum eine Vielzahl von piezoelektrischen Messelementen mit jeweils ersten und zweiten Kraftaufnahmeflächen entlang der Längsachse angeordnet ist, welche Kraftaufnahmeflächen den ersten bzw. zweiten Pressflächen zugewandt sind; wobei jedes der Messelemente zwischen zwei Aufnahmeelementen angeordnet ist, welche zwei Aufnahmeelementen durch die Pressflächen eine Vorspannung auf die Messelemente ausüben; und wobei alle ersten Kraftaufnahmeflächen der Messelemente durch eine Elektrode elektrisch miteinander verbunden und zur ersten Pressfläche elektrisch isoliert sind.

### Stand der Technik

Solche WIM Sensoren werden in Strassen eingebaut, sodass sie mindestens eine Radspur, vorzugsweise aber die gesamte Spur für Strassenfahrzeuge durchqueren. Auch längere WIM Sensoren von bis zu 4m sind bekannt. Die WIM Sensoren sind in der Lage, die dynamischen Radlasten der überfahrenden Räder zu ermitteln, sodass schliesslich auf die dynamische Gesamtlast des Fahrzeuges geschlossen werden kann, allenfalls zusammen mit einem Anhänger, die auf den WIM Sensor oder die WIM Sensoren bei der Überfahrt wirken.

Es gibt verschiedene Modelle von WIM Sensoren, die auf unterschiedlichen Messprinzipien beruhen. Für die vorliegende Erfindung von Bedeutung sind WIM Sensoren eingangs beschriebener Art.

Ein erstes Beispiel eines solchen WIM Sensors ist in der US5265481A beschrieben. Im Innenraum des Hohlprofils sind jeweils zwei piezoelektrische Messelemente übereinander angeordnet. Zwischen ihnen befindet sich eine Elektrode, die alle solche Messelementpaare miteinander verbindet und am Ende des Hohlprofils mit einem Stecker oder einem Ausgabeleiter elektrisch verbunden ist. Beidseitig, d.h. oberhalb und unterhalb der Messelemente sind Auflageelemente angeordnet. Diese sorgen dafür, dass die Messelemente zwischen den Pressflächen im Innenraum eben aufliegen. Die Pressflächen sind beidseitig über den Profilrand miteinander verbunden und sorgen für eine gleichmässige Vorspannung auf die Messelemente, indem der Profilrand unter Spannung steht.

In US4799381A ist ein WIM Sensor offenbart, in welchem drucksensitive Messelemente aus Halbleitermaterial in eine Matrix eingebettet sind und entlang einer Achse in einem U-förmigen Kanal angeordnet sind. Der WIM Sensor ist in einer Fahrbahn angeordnet. Die Messelemente sind in einer Gummiähnlichen Masse eingebettet sind, mit welcher der U-förmige Kanal ausgefüllt ist.

Wichtig für eine gute Messung ist, dass die Vorspannung über die gesamte Länge des WIM Sensors gleichmässig stark ist. Damit dies der Fall ist, muss vorerst das Hohlprofil über die gesamte Länge gleichmässig ausgestaltet sein bezüglich Wanddicke der Profilränder, Abstand der Pressflächen zueinander und Ebenheit der Pressflächen. Zudem muss auch das gesamte Sensorpaket, das in das Hohlprofil eingeschoben wird, an allen Messelementen dieselben Dicken aufweisen. Dies betrifft, abgesehen von den Messelementen selbst, insbesondere die Auflageelemente und die Elektrode. In der US5265481A hat jedes Messelemente Paar ein eigenes Paar von Auflageelementen. Der Zusammenbau einer solchen Anordnung ist relativ schwierig, weil alle Komponenten des Sensorpakets präzise zueinander ausgerichtet sein müssen und sich auch nicht mehr verschieben dürfen, bis das Sensorpaket vollständig im aufgespannten Hohlprofil eingesetzt ist.

Eine zusätzliche Schwierigkeit betrifft die Verwendung von Stahlelektroden, welche für die Einhaltung der Dickentoleranz gewalzt wurden. Durch das Walzen bekommt das Band zeitweise eine Bogenform, die sich durch die gesamte Länge des Bandes schlängelt. Die Toleranzen der Dicke und der Breite werden dabei zwar eingehalten, doch die seitlichen Verschiebungen können um durchaus mehr als 2mm pro Meter variieren. Dies führt zu viel Ausschuss, da nur Sektoren des Bandes verwendet werden können, welche gerade verlaufen, da sonst seitliche Kurzschlüsse auftreten können.

Aus der WO2013104080A1 ist ein WIM Sensor mit demselben Messprinzip beschrieben. Sie befasst sich mit der Aufgabe, das Sensorpaket mit den geforderten Toleranzen kostengünstiger herzustellen. Erreicht wird dies durch lange Aufnahmeelemente, die an ihren Stirnseiten durch formschlüssige Verbindungen miteinander verbunden werden. So können einerseits Aufnahmeelemente verwendet werden, die erheblich kürzer als die Gesamtlänge des WIM Sensors sind, und andererseits lässt sich das gesamte Sensorpaket durch die formschlüssigen Verbindungen einfach in das Hohlprofil einziehen. Die Masshaltigkeit bei kürzeren Aufnahmeelementen ist erheblich einfacher als bei sehr langen. Da dieses Sensorpaket im Gegensatz zu dem aus der US5265481A jeweils keine Messelement Paare sondern nur jeweils ein Messelement an einer Messstelle aufweist, ist die Elektrode, welche alle Messelemente miteinander verbindet, mit einer Isolation überdeckt.

Aus der EP0654654A1 ist schliesslich ein WIM Sensor eingangs beschriebener Art bekannt, welcher eine Isolierplatte aufweist, auf welcher zwei verschiedenartige, nebeneinander oder übereinander angeordnete Messelemente aufliegen. Die Isolierplatte ist partiell mit Leitpfaden versehen.

Der Vorteil, wenn die Isolation und die leitende Schicht der Elektrode zu einem einzigen Bauteil zusammengefasst werden, besteht darin, dass sich diese nicht mehr zueinander verschieben können.

### Darstellung der Erfindung

Es ist die Aufgabe der vorliegenden Erfindung, einen eingangs beschrieben WIM Sensor zu beschreiben, der eine höhere Messgenauigkeit aufweist. Zudem soll der WIM Sensor in der Herstellung billiger und im Zusammenbau vereinfacht werden.

Die Aufgabe wird durch die Merkmale des ersten Patentanspruchs gelöst. Erfindungsgemäss ist die Elektrode als lange, streifenförmige Isolierfolie mit einer einseitig versehenen, elektrisch leitenden Schicht ausgestaltet; wobei die Elektrode im Innenraum zwischen den Messelementen und der ersten Pressfläche angeordnet ist; und wobei die elektrisch leitende Schicht zu den Messelementen gerichtet ist.

Gemäss dem Erfindungsgedanken wird die gesamte Dickentoleranz der Komponenten dadurch verringert, dass die Isolation zusammen mit der Elektrode zu einem einzigen Bauteil ausgestaltet ist, insbesondere als eine Isolierfolie mit einer leitenden Schicht. Da Dickentoleranzen von Kunststoffen in der Regel etwa 10% der Gesamtdicke ausmachen, kann diese Toleranz enorm verringert werden, wenn die Isolation nicht als Platte sondern als Folie ausgestaltet ist. Wenn zudem, wie in der erfindungsgemässen Vorrichtung vorgesehen, die Elektrode als elektrisch leitende Schicht auf der Isolierfolie angebracht ist, kann die Toleranz dadurch zusätzlich verringert werden, da an Stelle von zwei Bauteilen, namentlich einer Isolation und einer Elektrode, nur noch ein Bauteil eingebaut wird. Da jedes Bauteil in Kraftflussrichtung an zwei seiner Seiten eine gewisse Unebenheit aufweist und alle Unebenheiten zusammen die Masshaltigkeit der Dicke des Gesamtaufbaus verringern, kann durch die Verringerung der Anzahl der Bauteile die erforderliche Dicke besser eingehalten werden.

Die Verbesserung wird demnach einerseits durch die Verringerung der Gesamtdicke der Bauteile, insbesondere der Kunststoff-Isolation, und andererseits durch die Verringerung der Anzahl Bauteile erreicht. Die elektrisch leitende Schicht wird stoffschlüssig an die Isolierfolie angebracht, sie übernimmt die technische Funktion der Elektrode. In der Folge wird an Stelle der Elektrode auch die Isolierfolie genannt, weil auf dieser erfindungsgemäss die Elektrode als Schicht aufgebracht ist.

Als piezoelektrische Messelemente werden bevorzugt Einkristalle verwendet, insbesondere aus Quarz, um genaue Messresultate zu erhalten.

### Kurze Beschreibung der Zeichnungen

Im Folgenden wird die Erfindung unter Beizug der Zeichnungen näher erklärt. Es zeigen
- Fig. 1: eine schematische Darstellung einer Strasse mit einem darin eingebauten eines WIM Sensor, der von einem Fahrzeug überfahren wird;
- Fig. 2: eine schematische Darstellung eines WIM Sensors nach dem Stand der Technik im Querschnitt, eingebaut in einer Strasse;
- Fig. 3: eine schematische Darstellung eines WIM Sensors mit seinem Sensorpaket (a) gemäss dem Stand der Technik und (b) als erfindungsgemässe Ausführung, jeweils im Querschnitt;
- Fig. 4: eine schematische Darstellung eines erfindungsgemässen Sensorpakets im Querschnitt mit den anliegenden Pressflächen;
- Fig. 5: eine schematische Darstellung eines Ausschnitts eines Randbereichs eines erfindungsgemässen WIM Sensors im Längsschnitt;
- Fig. 6a: eine schematische Darstellung einer Isolierfolie gemäss einer erfindungsgemässen Ausführung im Querschnitt;
- Fig. 6b: eine Isolierfolie gemäss Fig. 6a in alternativer Ausführung;
- Fig. 7a: eine schematische Darstellung eines Käfigs, welches das Sensorpaket zusammenhält, gemäss Schnitt A-A aus Fig. 5;
- Fig. 7b: eine schematische Darstellung des Käfigs aus Fig. 7a im Schnitt B-B.

### Wege zur Ausführung der Erfindung

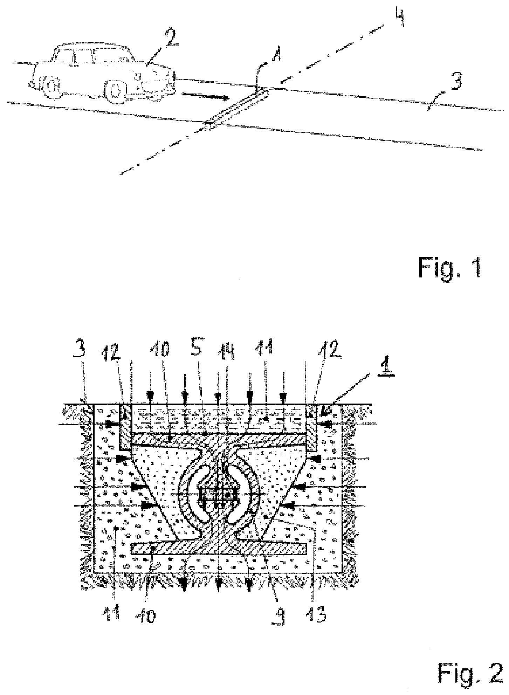

Fig. 1 zeigt eine Strasse 3, auf der ein Fahrzeug 2 in Pfeilrichtung einen in der Strasse 3 eingebauten WIM Sensor 1 mit einer Längsachse 4 überquert. Der WIM Sensor 1 ist mit etwa 5cm Breite schmaler als die Auflagefläche eines Rades des Fahrzeuges 2, seine Länge reicht in der Regel über die gesamte Spur des Fahrzeuges 2, wie in Fig. 1 dargestellt, über die gesamte Strasse 3. Er misst die dynamischen Lasten, welche bei deren Überfahrt des Fahrzeuges 2 auf die Strasse 3 wirken.

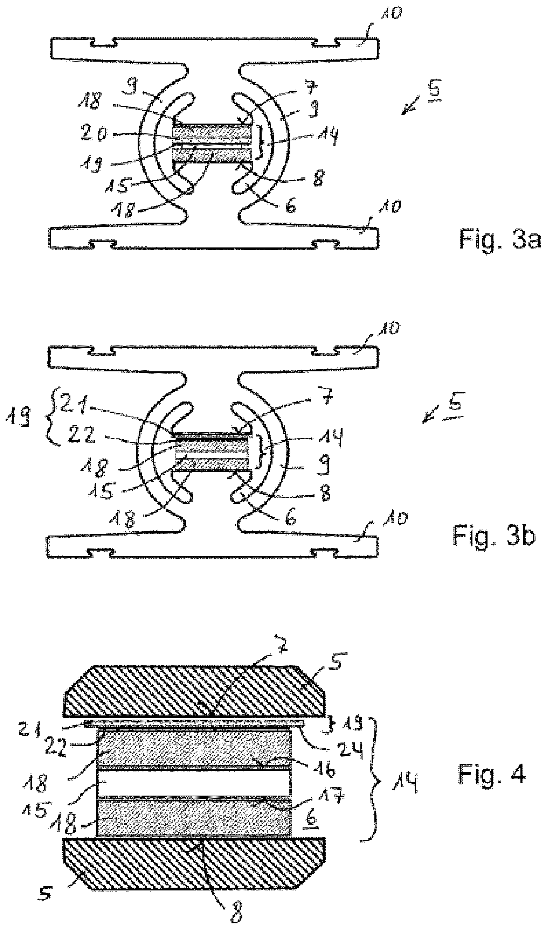

Fig. 2 zeigt in einer schematischen Darstellung im Querschnitt einen WIM Sensor 1 nach dem Stand der Technik, der in einer Strasse 3 eingebaut ist. Er ist lang ausgestaltet, wobei seine Längsachse 4 senkrecht zur Papierebene verläuft. Der WIM Sensor 1 umfasst ein Hohlprofil 5 mit einem Innenraum 6, in dessen Mitte ein Sensorpaket 14 angeordnet ist. Das Hohlprofil 5 mit dem Sensorpaket 14 ist auch in Fig. 3a dargestellt und dort beschriftet. In dieser Ausführung umfasst das Hohlprofil 5 zwei Krafteinleitungsflansche 10, welche die auftretenden Radkräfte gebündelt durch das Sensorpaket 14 leiten. Die Krafteinleitungsflansche 10 werden auch als Kraftausleitungsflansche 10 bezeichnet. Auf der Oberfläche eines oberen Krafteinleitungsflansches 10 ist eine Masse angebracht, in der Regel eine Vergussmasse 11, die beidseitig mit einer weichen Ausgleichswandung 12 umgeben ist. Mit einer ähnlichen Vergussmasse 11 ist auch der Kanal in der Strasse 3 vergossen, in den der WIM Sensor 1 eingelegt ist. Zudem ist der Bereich, der direkt das Hohlprofil 5 umgibt, mit einem weichen Füllstoff 13 umgeben, der verhindert, dass seitliche Kräfte auf das Hohlprofil 5 auftreten.

Die senkrechten Pfeile beschreiben den Kraftfluss von einem Rad, das den WIM Sensor 1 auf der Strasse 3 überquert. Sie verlaufen gebündelt durch das Sensorpaket 14 und treten auf der Auflagefläche des unteren Kraftausleitungsflansches 10 wieder aus. Die seitlichen Pfeile stellen Seitenkräfte dar, die auf den WIM Sensor 1 einwirken. Sie werden durch den Füllstoff 13 sowie durch die weichen Ausgleichswandungen 12 aufgefangen.

Fig. 3a zeigt eine schematische Darstellung eines WIM Sensors 1 mit seinem Sensorpaket 14 im Querschnitt mit demselben Hohlprofil 5. Dieses weist einen Innenraum 6 auf, der wiederum eine erste und eine zweite innere Pressfläche 7, 8 aufweist, die einander gegenüber angeordnet sind. Sie sind beidseitig über gebogene, vorgespannte Profilränder 9 miteinander verbunden.

Im Innenraum 6 ist zwischen diesen beiden Pressflächen 7, 8 das Sensorpaket 14 angeordnet. Es umfasst eine Vielzahl von piezoelektrischen Messelementen 15, die entlang der Längsachse angeordnet sind. Sie weisen jeweils erste und zweite Kraftaufnahmeflächen 16, 17 auf, mit denen sie den ersten bzw. zweiten Pressflächen 7, 8 zugewandt sind, wobei jedes der Messelemente 15 zwischen zwei Aufnahmeelementen 18 angeordnet ist, welche durch die Pressflächen 7, 8 eine Vorspannung auf die Messelemente 15 ausüben. Alle ersten Kraftaufnahmeflächen 16 der Messelemente sind einerseits durch eine Elektrode 19 elektrisch miteinander verbunden und andererseits zur ersten Pressfläche 7 elektrisch isoliert angeordnet. Als piezoelektrische Messelemente 15 sind Einkristalle, insbesondere Quarze, bevorzugt.

Die erfindungsgemässe Ausführungsform gemäss Fig. 3b und 4 bis 7 entspricht im Prinzipaufbau den Ausführungen gemäss Fig. 1 bis 3. Der erfindungsgemässe WIM Sensor 1 weist vorzugsweise eine Gesamtlänge von 0.5m bis 4m auf.

In Fig. 3a ist eine Ausführungsform nach dem Stand der Technik dargestellt. Sie weist eine Isolationsplatte 20 sowie eine Elektrode 19 auf, welche als zwei Bauteile ausgestaltet sind und welche nach dem Stand der Technik angrenzend an die Messelemente 15 angeordnet sind. Es sind auch gewisse Variationen von WIM Sensoren bekannt, deren Sensorpaket sich von der Variante nach Fig. 3a leicht unterscheidet. Beispielsweise können die Pressflächen 7, 8 im Hohlprofil 5 alternativ zur Darstellung, wo sie an Hervorhebungen angebracht sind, direkt in die Profilränder 9 übergehen, wie in der US 5265481 beschrieben.

In Fig. 3b ist, als wesentlicher Unterschied zur Ausführungsform nach Fig. 3a nach dem Stand der Technik, ein erfindungsgemässes Sensorpaket 14 dargestellt, das in seinem Aufbau in Fig. 4 vergrössert dargestellt ist.

Der erfindungsgemässe WIM Sensor 1 ist geeignet zum Messen von Radkräften von Fahrzeugen 2 auf einer Strasse 3 bei der Überfahrt. Er weist ein entlang einer Längsachse 4 lang ausgestaltetes Hohlprofil 5 mit einem Innenraum 6 auf, der wiederum eine erste und eine zweite innere Pressfläche7, 8 aufweist, die einander gegenüber angeordnet sind und beidseitig über gebogene, vorgespannte Profilränder 9 miteinander verbunden sind.

In Fig. 4 ist ein erfindungsgemässes Sensorpaket 14 im Querschnitt in einem solchen Innenraum 6 dargestellt, wobei vom Hohlprofil 5 nur die Gebiete mit der ersten und der zweiten inneren Pressfläche 7, 8 dargestellt sind.

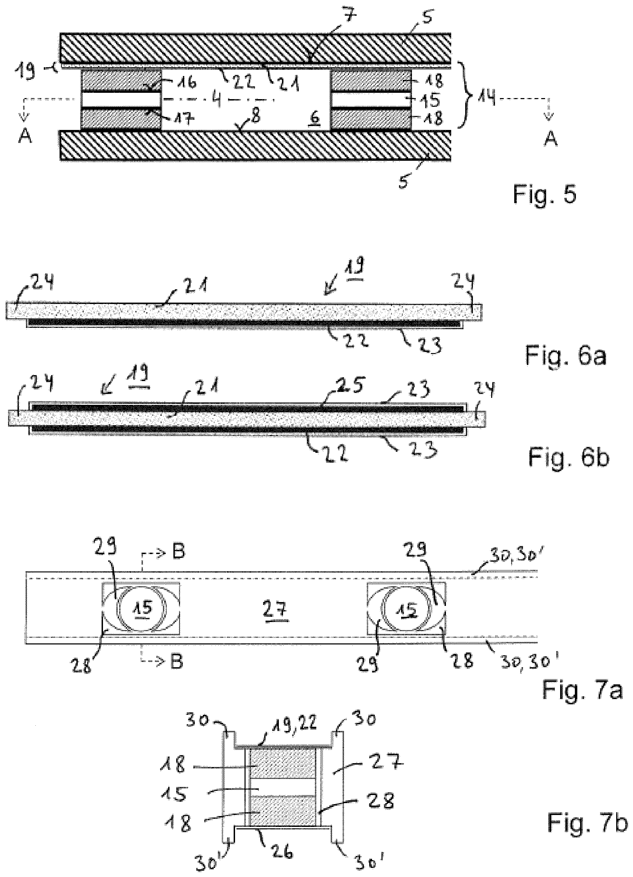

Fig. 5 zeigt einen solchen Innenraum 6 zwischen der ersten und der zweiten inneren Pressfläche 7, 8 entlang der Längsachse 4 im Bereich der ersten zwei Messelemente 15. In der Folge wird die Erfindung mit Bezug auf die Figuren 3b, 4 und 5 beschrieben.

Im Innenraum 6 ist eine Vielzahl von piezoelektrischen Messelementen 15 mit jeweils ersten und zweiten Kraftaufnahmeflächen 16, 17 entlang der Längsachse 4 angeordnet, welche den ersten bzw. zweiten Pressflächen 7, 8 zugewandt sind, wobei jedes der Messelemente 15 zwischen zwei Aufnahmeelementen 18 angeordnet ist. Diese üben durch die Pressflächen 7, 8 eine Vorspannung auf die Messelemente 15 aus. Alle ersten Kraftaufnahmeflächen 16 der Messelemente 15 sind durch eine Elektrode 19 elektrisch miteinander verbunden und zur ersten Pressfläche 7 elektrisch isoliert. Die piezoelektrischen Messelemente 15 sind vorzugsweise aus einem Einkristall, wie beispielsweise Quarz.

Erfindungsgemäss ist die Elektrode 19 als lange, streifenförmige Isolierfolie 21 mit einer einseitig versehenen, elektrisch leitenden Schicht 22 ausgestaltet und im Innenraum 6 zwischen den Messelementen 15 und der ersten Pressfläche 16 angeordnet, wobei die elektrisch leitende Schicht 22 zu den Messelementen 15 gerichtet ist. Als elektrisch leitendes Material der elektrisch leitenden Schicht 22 eignet sich insbesondere Chrom und/oder Kupfer und/oder Zirkonium und/oder Gold und Legierungen, die solche Metalle enthalten. Über ihre gesamte Länge sollte ihre Dicke 0.005mm bis 0.05mm, vorzugsweise 0.009mm bis 0.036mm aufweisen, mit einer Dickentoleranz von höchstens 10%, und vorzugsweise höchstens 0.002mm.

Eine solche Elektrode ist in Fig. 6a dargestellt. Die Isolierfolie 21 ist vorzugsweise eine Kunststofffolie, insbesondere eine Polyimidfolie und weist eine Dicke von 0.02mm bis 0.2mm, vorzugsweise 0.05mm auf, wobei die Dickentoleranz der Isolierfolie über ihre gesamte Länge höchstens 10% und höchstens 0.01mm beträgt.

Da Kunststoffe in der Regel eine hohe Dickentoleranz aufweisen, insbesondere von 10% oder mehr, kann die Masshaltigkeit des Sensorpakets 14 dadurch eingeschränkt werden, dass an Stelle einer Isolierplatte 20 eine Isolierfolie 21 verwendet wird. Zudem hat sich herausgestellt, dass die Dickentoleranz erneut verringert werden kann, indem die elektrisch leitende Schicht 22 und die Isolierfolie 21 als ein gemeinsames Bauteil 19 ausgestaltet ist, das hier nach seiner Funktion Elektrode 19 genannt wird.

Mehrere bekannte Beschichtungsverfahren eignen sich, um die elektrisch leitende Schicht 22 mit der Isolierfolie 21 mechanisch dauerhaft zu verbinden. So kann die elektrisch leitende Schicht 22 die Isolierfolie 21 auflaminiert sein. Unter Lamination wird ein stoffschlüssiges, thermisches Fügeverfahren verstanden. Die Lamination kann mit oder ohne intermediäres Klebemittel erfolgen. Die elektrisch leitende Schicht 22 kann mit einem intermediären Klebemittel stoffschlüssig mit der Isolierfolie 21 verbunden werden. Die elektrisch leitende Schicht 22 kann aber auch ohne intermediäres Klebemittel stoffschlüssig mit der Isolierfolie 21 verbunden sein, beispielsweise wenn die Isolierfolie 21 aus Kunststoff ist und bei erhöhter Temperatur und/oder erhöhtem Druck viskos wird und sich in diesem viskosen Zustand mit der elektrisch leitende Schicht 22 ohne intermediäres Klebemittel stoffschlüssig verbindet.

Weitere bekannte Beschichtungsverfahren sind das thermische Aufdampfen oder das Beschichten durch Sputtern oder das galvanisch Beschichten. Beim thermischen Aufdampfen wird elektrisch leitendes Material erhitzt, wobei sich Atome oder Moleküle lösen und auf der Isolierfolie 21 zur elektrisch leitenden Schicht 22 kondensieren. Beim Sputtern wird elektrisch leitendes Material mit energetischen Ionen bombardiert, wobei Atome oder Moleküle des elektrisch leitenden Materials abgetragen werden und auf der Isolierfolie 21 zur elektrisch leitenden Schicht 22 abscheiden. Beim galvanischen Beschichten wird eine fest haftende elektrisch leitende Schicht 22 aus formlosem elektrisch leitendem Material auf der Isolierfolie 21 aufgetragen. Beim thermischen Aufdampfen oder Beschichten durch Sputtern oder galvanischem Beschichten wird eine Oberfläche der Isolierfolie 21 mit hoher Gleichmässigkeit und Reinheit mit elektrisch leitenden Material zur elektrisch leitenden Schicht 22 beschichtet. Somit lässt sich mit diesen Beschichtungsverfahren eine weitere Verringerung der Dickentoleranz erreichen, da hierbei Schichtdicken prozessbedingt sehr präzise hergestellt werden können. Dabei werden auch kleinere Unebenheiten auf der Oberfläche der Isolierfolie 21 durch die leitende Schicht 22 ausgeglichen. Bei Kenntnis der vorliegenden Erfindung kann der Fachmann auch Kombinationen der genannten Beschichtungsverfahren verwenden. So kann er bei der Lamination oder beim galvanischen Beschichten einen metallischen Haftvermittler verwenden. Ein solcher metallischer Haftvermittler aus Chrom oder Zirkonium oder einem anderen geeigneten Metall wird vor der Lamination oder dem galvanischen Beschichten durch thermisches Aufdampfen oder Sputtern auf die Isolierfolie 21 aufgebracht. Daraufhin erfolgt die eigentliche Lamination oder das eigentliche galvanische Beschichten.

Um eine Korrosion der elektrisch leitenden Schicht 22 zu verhindern, kann diese mit einem Korrosionsschutz 23 überzogen sein, der beispielsweise Silber enthalten kann. Die Dicke des Korrosionsschutzes 23 beträgt vorzugsweise von 0.0001mm bis 0.0005mm. Alternativ kann die elektrisch leitende Schicht 22 auch ein Edelmetall, insbesondere Gold an Stelle von Kupfer aufweisen. Damit wird eine Korrosion verhindert.

In einer bevorzugten Ausgestaltung der Erfindung weist die Isolierfolie 21 beidseitig neben der elektrisch leitenden Schicht 22 isolierende Randbereiche 24 auf. Dadurch können Kurzschlüsse verhindert werden, die auftreten können, wenn dünne Isolierfolien 21 verwendet werden und die elektrisch leitende Schicht bis zum Rand verläuft. Diese elektrisch isolierenden Randbereiche 24 weisen bevorzugt eine Breite von mindestens 0.5mm auf. Da die elektrisch leitende Schicht 22 eine gleichmässige Breite aufweisen sollte und mindestens dieselbe Breite haben sollte wie das angrenzende Aufnahmeelement 18, oder zumindest dieselbe Breite wie die Messelemente 15, ist die Isolierfolie 21 demnach breiter als jedes der Messelemente 15 und die an die Isolierfolie 21 angrenzenden Aufnahmeelemente 18, wie in Fig. 4 ersichtlich ist. So ist eine gute Isolation zwischen dem Hohlprofil 5 und den Messelementen 15 gewährleistet.

Vorzugsweise ist die Isolierfolie 21 angrenzend an die erste Pressfläche 7 angeordnet. Dies hat den Vorteil, dass die Messelemente 15 zusammen mit den Aufnahmeelementen 18 als Paket zusammengebaut werden können, auf welches schliesslich die beschichtete Isolierfolie 21 gelegt wird. So wird der Zusammenbau vereinfacht, insbesondere hinsichtlich einer Zentrierung der Messelemente 15, wenn die Aufnahmeelemente 18 wie auch die Messelemente 15 pillenförmig ausgestaltet sind. Ein weiterer Vorteil dieser Anordnung besteht darin, dass das Messelement 15, insbesondere der Einkristall, bessere Resultate liefert, wenn er zwischen Metallplatten wie den Aufnahmeelementen 18 und nicht angrenzend an Kunststoff wie die Isolierfolie 21 oder eine Isolierplatte 20 angeordnet ist, da Kunststoff um ein Vielfaches weicher ist als beispielsweise Quarz oder jeder andere piezoelektrische Einkristall. Eine harte Auflagefläche des Messelements verhindert somit ein Schwimmen.

Um die Messgenauigkeit weiter zu verbessern, wird die Isolierfolie 21 gegenüber der elektrisch leitenden Schicht 22 mit einer elektrisch leitenden Gegenschicht 25 versehen, wie in Fig. 6b dargestellt. Dadurch wird verhindert, dass sich zwischen der elektrisch leitenden Schicht 22 und der ersten inneren Pressfläche 7 eine Kapazität bilden kann, wenn die Isolierfolie 21 stellenweise von dieser beabstandet ist. Der isolierende Randbereich 24 sollte auch hier eingehalten werden, um Kurzschlüsse zu vermeiden.

Zudem ist in einer bevorzugten Ausgestaltung des erfindungsgemässen WIM Sensors 1 zwischen den Messelementen 15 und der zweiten Pressfläche 8 eine Zusatz-Isolierfolie 26 mit einer elektrisch leitenden Schicht 22 angeordnet, welche den Messelementen 15 zugewandt ist. Dies kann eine erdungsbedingte Störung der Messung verhindern, wenn zum Beispiel die Erdung des WIM Sensors 1 nicht vollständig gewährleistet ist. Insbesondere kann die Zusatz-Isolierfolie 26 identisch ausgestaltet sein wie die Isolierfolie 21, sie können auch symmetrisch zueinander angeordnet sein bezüglich der Längsachse 4.

In einer bevorzugten Ausführungsform sind im erfindungsgemässen WIM Sensor 1 im Innenraum 6 ein oder mehrere Käfige 27 angeordnet, in welchen die Messelemente 15 und die Aufnahmeelemente 18 als Montagehilfe fixiert sind. Die Figuren 7a und 7b zeigen einen solchen Käfig 27 als Beispiel in einer Aufsicht resp. in einer Ansicht. Der Käfig 27 umfasst Aussparungen 28 mit Klammern 29, welche die Messelemente 15 und die Aufnahmeelemente 18, wie sie in Fig. 5 dargestellt sind, in ihrer Position halten. Zudem umfasst der Käfig 27 einseitig eine Einlageschiene 30, in welche die beschichtete Isolierfolie 21 eingelegt werden kann. Eine weitere Einlageschiene 30' gegenüber der ersten kann als Montagehilfe verwendet werden, um das Sensorpaket 14 über die zweite innere Pressfläche 8 zu schieben. Dazwischen kann auch eine Zusatz-Isolierfolie 26 eingelegt werden, wie ebenfalls in Fig. 7ab dargestellt.

Für die Montage werden die Profilränder 9 zusammengedrückt, wodurch sich die inneren Pressflächen 7, 8 von einander beabstanden, sodass das Sensorpaket 14 eingeschoben werden kann. Sobald die Profilränder 9 nicht mehr zusammengedrückt werden, erzeugen die Pressflächen 7, 8 eine Vorspannung auf das Sensorpaket 14, das eine dafür entsprechende Gesamthöhe aufweist. Diese Gesamthöhe ist grösser als der Abstand der beiden inneren Pressflächen 7, 8 zueinander im leeren und entspannten Zustand.

Erfindungsgemäss ist die Breite der ersten Pressfläche 7 schmaler als die Breite der Einlageschiene 30 und die Breite der Elektrode 19, welche in dieser Einlageschiene 30 ist. In diesem Fall kann die Isolierfolie 21 vollflächig mit der elektrisch leitenden Schicht 22 versehen sein. Selbst wenn die elektrisch leitenden Schicht 22 entlang der Schnittkante der Isolierfolie 21 auf den Rand deren Rückseite übergehen würde, wäre immer noch ein Abstand von der elektrisch leitenden Schicht 22 zur ersten Pressfläche 7 gewährleistet. Ein Kurzschluss ist somit ausgeschlossen. Dadurch, dass so auf den isolierenden Randbereich 24 verzichtet werden kann, kann die Elektrode 19 viel kostengünstiger hergestellt werden.

Die Güte des WIM Sensors 1, wie insbesondere die Messgenauigkeit und/oder die Prozessstabilität, hängt zum grossen Teil von der Masshaltigkeit der vorgegebenen Dickentoleranzen ab. Wie eingangs erläutert wird damit die auf allen Messelementen wirkenden Vorspannung vergleichmässigt.

### Bezugszeichenliste

- 1: WIM Sensor
- 2: Fahrzeug
- 3: Strasse
- 4: Längsachse
- 5: Hohlprofil
- 6: Innenraum
- 7: erste innere Pressfläche
- 8: zweite innere Pressfläche
- 9: Profilrand
- 10: Krafteinleitungsflansch respektive Kraftausleitungsflansch
- 11: Vergussmasse
- 12: Ausgleichswandung
- 13: Füllstoff
- 14: Sensorpaket
- 15: piezoelektrisches Messelement
- 16: erste Kraftaufnahmefläche
- 17: zweite Kraftaufnahmefläche
- 18: Aufnahmeelement
- 19: Elektrode
- 20: Isolierplatte
- 21: Isolierfolie
- 22: elektrisch leitende Schicht
- 23: Korrosionsschutz
- 24: isolierender Randbereich
- 25: elektrisch leitende Gegenschicht
- 26: Zusatz-Isolierfolie
- 27: Käfig
- 28: Aussparung
- 29: Klammer
- 30, 30': Einlageschiene

## Patentansprüche

1. WIM Sensor (1) zum Messen von Radkräften von Fahrzeugen (2) auf einer Strasse (3) bei der Überfahrt; wobei der WIM Sensor (1) ein entlang einer Längsachse (4) lang ausgestaltetes Hohlprofil (5) mit einem Innenraum (6) aufweist, welcher Innenraum (6) eine erste und eine zweite innere Pressfläche (7, 8) aufweist, welche Pressflächen (7, 8) einander gegenüber angeordnet sind und beidseitig über gebogene, vorgespannte Profilränder (9) miteinander verbunden sind; wobei im Innenraum (6) eine Vielzahl von piezoelektrischen Messelementen (15) mit jeweils ersten und zweiten Kraftaufnahmeflächen (16, 17) entlang der Längsachse (4) angeordnet ist, welche Kraftaufnahmeflächen (16, 17) den ersten bzw. zweiten Pressflächen (7, 8) zugewandt sind; und wobei alle ersten Kraftaufnahmeflächen (16) der Messelemente (15) durch eine Elektrode (19) elektrisch miteinander verbunden und zur ersten Pressfläche (7) elektrisch isoliert sind; **dadurch gekennzeichnet, dass** die Elektrode (19) als lange, streifenförmige Isolierfolie (21) mit einer einseitig versehenen, elektrisch leitenden Schicht (22) ausgestaltet ist; dass die Elektrode (19) im Innenraum (6) zwischen den Messelementen (15) und der ersten Pressfläche (7) angeordnet ist; dass die elektrisch leitende Schicht (22) zu den Messelementen (15) gerichtet ist; und dass die Isolierfolie (21) gegenüber der elektrisch leitenden Schicht (22) mit einer elektrisch leitenden Gegenschicht (25) versehen ist.

2. WIM Sensor (1) nach Anspruch 1, **dadurch gekennzeichnet, dass** die Isolierfolie (21) angrenzend an die erste Pressfläche (7) angeordnet ist.

3. WIM Sensor (1) nach einem der Ansprüche 1 bis 2, **dadurch gekennzeichnet, dass** die Isolierfolie (21) beidseitig mindestens neben einer der elektrisch leitenden Schicht (22) oder der elektrisch leitenden Gegenschicht (25) isolierende Randbereiche (24) aufweist.

4. WIM Sensor (1) nach Anspruch 3, **dadurch gekennzeichnet, dass** die elektrisch isolierenden Randbereiche eine Breite von mindestens 0.5mm aufweisen; und dass die Isolierfolie (21) breiter ist als die Breite jedes der Messelemente (15).

5. WIM Sensor (1) nach einem der Ansprüche 1 bis 4, **dadurch gekennzeichnet, dass** die Isolierfolie (21) eine Kunststofffolie, vorzugsweise eine Polyimidfolie ist; und dass die Isolierfolie (21) eine Dicke von 0.02mm bis 0.2mm, vorzugsweise 0.05mm aufweist.

6. WIM Sensor (1) nach einem der Ansprüche 1 bis 5, **dadurch gekennzeichnet, dass** eine Dickentoleranz der Isolierfolie (21) über ihre gesamte Länge höchstens 10% und höchstens 0.01mm beträgt.

7. WIM Sensor (1) nach einem der Ansprüche 1 bis 6, **dadurch gekennzeichnet, dass** die elektrisch leitende Schicht (22) auf der Isolierfolie (21) auflaminiert oder thermisch aufgedampft oder durch Sputtern beschichtet oder galvanisch beschichtet ist.

8. WIM Sensor (1) nach einem der Ansprüche 1 bis 7, **dadurch gekennzeichnet, dass** die elektrisch leitende Schicht (22) eine Dicke von 0.005mm bis 0.05mm, vorzugsweise 0.009mm bis 0.036mm aufweist; und dass die elektrisch leitende Schicht (22) über ihre gesamte Länge eine Dickentoleranz von höchstens 10% und vorzugsweise höchstens 0.002mm beträgt.

9. WIM Sensor (1) nach einem der Ansprüche 1 bis 8, **dadurch gekennzeichnet, dass** die mit der gegenüber der elektrisch leitenden Schicht (22) mit der elektrisch leitenden Gegenschicht (25) versehene Isolierfolie (21) verhindert, dass sich zwischen der elektrisch leitenden Schicht (22) und der ersten inneren Pressfläche (7) eine Kapazität bildet, wenn die Isolierfolie (21) stellenweise von der Pressfläche (7) beabstandet ist.

10. WIM Sensor (1) nach einem der Ansprüche 1 bis 9, **dadurch gekennzeichnet, dass** zwischen den Messelementen (15) und der zweiten Pressfläche (8) eine Zusatz-Isolierfolie (26) mit einer elektrisch leitenden Schicht (22), welche den Messelementen (15) zugewandt ist, angeordnet ist; und dass die Zusatz-Isolierfolie (26) identisch ausgestaltet ist wie die Isolierfolie (19).

11. WIM Sensor (1) nach einem der Ansprüche 1 bis 10, **dadurch gekennzeichnet, dass** jedes der Messelemente (15) zwischen zwei Aufnahmeelementen (18) angeordnet ist, welche durch die Pressflächen (7, 8) eine Vorspannung auf die Messelemente (15) ausüben.

12. WIM Sensor (1) nach Anspruch 11, **dadurch gekennzeichnet, dass** die Messelemente (15) zusammen mit den Aufnahmeelementen (18) als ein Paket (15, 18) zusammengebaut sind; dass im Innenraum (6) mindestens ein Käfig (27) angeordnet ist, in welchem die Messelemente (15) und die Aufnahmeelemente (18) als Montagehilfe fixiert sind; dass der Käfig (27) Aussparungen (28) mit Klammern (29) aufweist; dass die Klammern (29) die Messelemente (15) und die Aufnahmeelemente (18) in ihrer Position halten; und dass die Messelemente (15) zusammen mit den Aufnahmeelementen (18) und der Elektrode (19) ein Sensorpaket (14) bilden.

13. WIM Sensor (1) nach Anspruch 12, **dadurch gekennzeichnet, dass** der Käfig (27) zusätzlich einseitig eine Einlageschiene (30) aufweist; und dass der Käfig (27) eine weitere Einlageschiene (30') gegenüber der ersten aufweist.

14. Verfahren zur Montage eines WIM Sensors (1) nach dem vorgehenden Anspruch, **dadurch gekennzeichnet, dass** das Verfahren den Schritt beinhaltet, dass für die Montage die Profilränder (9) zusammengedrückt werden, wodurch sich die inneren Pressflächen (7, 8) von einander beabstanden; und dass das Verfahren den Schritt beinhaltet, dass auf das Paket (15, 18) die beschichtete Isolierfolie (21) gelegt wird.

15. Verfahren nach dem vorgehenden Anspruch, **dadurch gekennzeichnet, dass** in die Einlageschiene (30) die beschichtete Isolierfolie (21) eingelegt wird; und dass mit der weitere Einlageschiene (30') das Sensorpaket (14) über die zweite innere Pressfläche (8) geschoben wird.

## Claims

1. A WIM sensor (1) for measuring wheel forces of vehicles (2) on a road (3) that pass over the sensor; said WIM sensor comprising an elongated hollow profile (5) along a longitudinal axis (4) thereof that has an interior space (6); wherein said interior space (6) comprises first and second inner pressing surfaces (7, 8), said pressing surfaces (7, 8) being arranged opposite of each other and connected to one another on both sides by curved, pre-tensioned profile edges (9); wherein in said interior space (6) are disposed a plurality of piezoelectric measuring elements (15) each having first and second force absorbing surfaces (16, 17) arranged along the longitudinal axes (4) thereof, said force absorbing surfaces (16, 17) facing said first and said second pressing surface (7, 8), respectively; and wherein all first force absorbing surfaces (16) of the measuring elements (15) are electrically connected with each other by an electrode (19) and are electrically insulated from the first pressing surface (7); **characterized in that** said electrode (19) is formed as a long strip of insulating film (21) provided with an electrically conductive layer (22) on one of its sides; further **characterized in that** said electrode (19) is disposed in said interior space (6) between the measuring elements (15) and the first pressing surface (7); and **in that** the electrically conductive layer (22) faces the measuring elements (15); and that the insulating film (21) is provided with an electrically conductive counter layer (25) opposite the electrically conductive layer (22).

2. The WIM sensor (1) according to claim 1, **characterized in that** the insulating film (21) is arranged adjacent to the first pressing surface (7).

3. The WIM sensor (1) according to any of claims 1 or 2, **characterized in that** the insulating film (21) comprises insulating edge portions (24) on both sides next to the electrically conductive layer (22) or the electrically conductive counter layer (25).

4. The WIM sensor (1) of claim 3, **characterized in that** the electrically insulating edge portions have a width of at least 0.5 mm; and the insulating film (21) is wider than the width of the adjacent piezoelectric measuring element (15).

5. The WIM sensor (1) according to any of claims 1 to 4 , **characterized in that** the insulating film (21) is a plastic film, preferably a polyimide film; and the insulating film (21) has a thickness of 0.02 mm to 0.2 mm, preferably of 0.05 mm.

6. The WIM sensor (1) according to any of claims 1 to 5, **characterized in that** a thickness tolerance of the insulating film (21) over its entire length is no more than 10% and no more than 0.01 mm.

7. The WIM sensor (1) according to any of claims 1 to 6, **characterized in that** the electrically conductive layer (22) is laminated onto or thermally evaporated on or coated by sputtering or galvanized on the insulating film (21).

8. The WIM sensor (1) according to any of claims 1 to 7, **characterized in that** the electrically conductive layer (22) has a thickness in the range of 0.005 mm to 0.05 mm, preferably of 0.009 mm to 0.036 mm; and **in that** the electrically conductive layer (22) has a thickness tolerance of no more than 10% and preferably no more than 0.002 mm over its entire length.

9. The WIM sensor (1) according to any of claims 1 or 8, **characterized in that** the electrically conductive counter layer (25) opposite the electrically conductive layer (22) prevents a capacitance from being generated between conductive layer (22) and first inner pressing surface (7) if the insulating film (21) is spaced apart therefrom in certain regions.

10. The WIM sensor (1) according to any of claims 1 to 9, **characterized in that** between the measuring elements (15) and the second pressing surface (8) is an additional insulating film (26) comprising an electrically conductive layer (22) that faces the measuring elements (15), and **in that** said additional insulating film (26) is identical in design to the insulating film (19).

11. The WIM sensor (1) according to any of claims 1 to 10, **characterized in that** each of said measuring elements (15) being disposed between two absorbing elements (18), wherein said two absorbing elements (18) exert a pretension onto the measuring elements (15) via the pressing surfaces (7, 8).

12. The WIM sensor (1) according to claim 11, **characterized in that** measuring elements (15) along with the absorbing elements (18) are assembled into a package (15,18); that at least one cage (27) is arranged in the interior space (6), said cage (27) serving as a mounting aid in which the measurement elements (15) and the absorbing elements (18) are fixed; **in that** the cage (27) comprises recesses (28) with brackets (29); that the brackets (29) keep measuring elements (15) and absorbing elements (18) in place; and that the measuring elements (15),the absorbing elements (18)and electrode (19) form a sensor package (14).

13. The WIM sensor (1) according to claim 12, **characterized in that** the cage (27) has at least one insertion rail (30) in which the insulating film (21) is inserted; and that the cage (27) features another insertion rail (30') disposed opposite of the first one.

14. Method of mounting a WIM Sensor (1) according to claim 13, **characterized in that** the method contains the step of pressing the profile edges (9) together whereby the inner pressing surfaces (7, 8) become spaced apart from each other leaving a space; and that the method contains the step that the coated insulating film (21) is placed onto the package (15,18).

15. Method of mounting a WIM Sensor (1) according to claim 14, **characterized in that** the coated insulating film (21) is placed into the insertion rail (30); and that the method contains the step of using the other insertion rail (30') disposed opposite of the first insertion rail (30) as a mounting aid to guide sensor package (14) over the second inner pressing surface (8).

## Revendications

1. Capteur WIM (1) pour mesurer les forces de roue qu'exercent les véhicules (2) traversant ledit capteur sur une route (3); ledit capteur WIM présentant, le long d'un axe longitudinal (4) de celui-ci, un profil creux de forme allongée (5) avec un espace intérieur (6); dans lequel ledit espace intérieur (6) comprend des première et seconde surfaces de pression intérieures (7, 8), lesdites surfaces de pression (7, 8) étant disposées à l'opposé l'une de l'autre et reliées l'une à l'autre des deux côtés par des bords profilés précontraints incurvés (9); dans lequel espace intérieur (6) est disposée une pluralité d'éléments de mesure piézoélectriques (15) ayant chacun des première et seconde surfaces d'absorption de force (16, 17) le long de leurs axes longitudinaux (4), lesdites surfaces d'absorption de force (16, 17) faisant face respectivement à ladite première et à ladite seconde surfaces de pression (7, 8); et dans lequel tous les premières surfaces d'absorption de force (16) des éléments de mesure (15) sont reliées électriquement entre elles par une électrode (19) et sont électriquement isolées vers la première surface de pression (7); **caractérisé en ce que** ladite électrode (19) est en forme d'une bande allongée de film isolant (21) pourvue d'une couche électriquement conductrice (22) sur l'un de ses côtés; **en ce que** ladite électrode (19) est disposée dans ledit espace intérieur (6) entre les éléments de mesure (15) et la première surface de pression (7); **en ce que** la couche électriquement conductrice (22) fait face aux éléments de mesure (15); et **en ce que** le film isolant (21) est pourvu d'une contre-couche électriquement conductrice (25) opposée à la couche électriquement conductrice (22).

2. Capteur WIM (1) selon la revendication 1, **caractérisé en ce que** le film isolant (21) est agencé adjacent à la première surface de pression (7).

3. Capteur WIM (1) selon l'une quelconque des revendications 1 à 2, **caractérisé en ce que** le film isolant (21) comprend des parties de bord isolantes (24) des deux côtés adjacentes à au moins une de la couche électriquement conductrice (22) ou de la contre-couche électriquement conductrice (25).

4. Capteur WIM (1) selon la revendication 3, **caractérisé en ce que** les parties de bord électriquement isolantes ont une largeur d'au moins 0,5 mm; et **en ce que** le film isolant (21) est plus large que la largeur de chacun des éléments de mesure (15).

5. Capteur WIM (1) selon l'une quelconque des revendications 1 à 4, **caractérisé en ce que** le film isolant (21) est un film plastique, de préférence un film de polyimide; et **en ce que** ledit film isolant (21) a une épaisseur de 0,02 mm à 0,2 mm, de préférence de 0,05 mm.

6. Capteur WIM (1) selon l'une quelconque des revendications 1 à 5, **caractérisé en ce qu'**une tolérance d'épaisseur du film isolant (21) sur toute la longueur de celui-ci est au maximum 10% et au maximum 0,01 mm.

7. Capteur WIM (1) selon l'une quelconque des revendications 1 à 6, **caractérisé en ce que** ladite couche électriquement conductrice (22) est laminée ou déposée par évaporation thermique ou déposée par pulvérisation cathodique ou appliquée par voie galvanique sur le film isolant (21).

8. Capteur WIM (1) selon l'une quelconque des revendications 1 à 7, **caractérisé en ce que** la couche électriquement conductrice (22) présente une épaisseur allant de 0,005 mm à 0,05 mm, de préférence de 0,009 mm à 0,036 mm, et **en ce que** la couche électriquement conductrice (22) présente une tolérance d'épaisseur sur toute la longueur de celle-ci d'au maximum 10% et de préférence d'au maximum 0,002 mm.

9. Capteur WIM (1) selon l'une quelconque des revendications 1 à 8, **caractérisé en ce que** le film isolant (21) pourvu de la contre-couche électriquement conductrice (25) opposée à la couche électriquement conductrice (22) prévient qu'une capacité est formé entre la couche électriquement conductrice (22) et la première couche de pression intérieure (7) si le film isolant (21) est espacé localement de la surface de pression intérieure (7).

10. Capteur WIM (1) selon l'une quelconque des revendications 1 à 9, **caractérisé en ce qu'**entre les éléments de mesure (15) et la seconde surface de pression (8) est disposé un film isolant supplémentaire (26) comprenant une couche électriquement conductrice (22) faisant face aux éléments de mesure (15), et **en ce que** ledit film isolant supplémentaire (26) est de conception identique au film isolant (19).

11. Capteur WIM (1) selon l'une quelconque des revendications 1 à 10, **caractérisé en ce que** chacun desdits éléments de mesure (15) est disposé entre deux éléments de réception (18), lesdits éléments de réception (18) exerçant une précontrainte sur les éléments de mesure (15) par l'intermédiaire de les surfaces de pression (7, 8).

12. Capteur WIM (1) selon la revendication 11, **caractérisé en ce que** les éléments de mesure (15) sont assemblés avec les éléments de réception (18) pour former un ensemble (15, 18); **en ce qu'**au moins une cage (27) est disposée dans l'espace intérieur (6), cage (27) dans laquelle sont fixés les éléments de mesure (15) et les éléments de réception (18) servant d'aide au montage, **en ce que** ladite cage (27) comporte des évidements (28) avec des clips de fixation (29); **en ce que** lesdits clips de fixation (29) maintiennent les éléments de mesure (15) et les éléments de réception (18) en position; et **en ce que** les éléments de mesure (15) forment avec les éléments de réception (18) et l'électrode un ensemble capteur (14).

13. Capteur WIM (1) selon la revendication 12, **caractérisé en ce que** la cage (27) comporte en outre sur un côté un rail d'insertion (30); et **en ce que** la cage (27) comporte un autre rail d'insertion (30') opposé au premier.

14. Procédé pour la montage d'un capteur WIM (1) selon la revendication précédente, **caractérisé en ce que** ledit procédé comporte l'étape de comprimer les bords profilés (9) pour la montage afin que les surfaces de pression intérieures (7, 8) s'écartent l'une de l'autre; et **en ce que** ledit procédé comporte l'étape de poser le film isolant (21) revêtu sur l'ensemble (15, 18).

15. Procédé selon la revendication précédente, **caractérisé en ce que** le film isolant (21) revêtu est inséré dans le rail d'insertion (30); et **en ce que** l'ensemble capteur (14) est coulissé sur la seconde surface de pression intérieure (8) par l'intermédiaire de l'autre rail d'insertion (30').
